# EUROPEAN PATENT APPLICATION

(11) **EP 3 451 277 A1**
(43) Date of publication of application: **06.03.2019**
(21) Application number: 16900542.8
(22) Date of filing: 26.04.2016
(51) Int. Cl.: G06Q 50/26, H04W 4/14, G01T 1/04

(54) **INTEGRATED SAFETY MANAGEMENT SYSTEM FOR RADIOISOTOPES AND RADIATION WORKERS**

(71) Applicant: Leniven Co., Ltd, Suwon-si, Gyeonggi-do 16471 (KR)
(72) Inventor: KIM, Hoon-Yu, Hwaseong-si Gyeonggi-do 18457 (KR); LIM, Ho-Sun, Seoul 06335 (KR)
(74) Representative: von Bülow & Tamada
(86) International application number: PCT/KR2016/004361
(87) International publication number: WO 2017/188468

(57) **Abstract**

The purpose of the present invention is to provide an integrated safety management system gathering locations and state data of radioisotopes and radiation workers into one integrated safety management system, and analyzing states of the radioisotopes and the radiation workers so as to enable measures to be taken and warning to be provided according to the analysis performed thereby, such that a radioisotope handling company can systematically perform, through the measures and the warning, safety management of the radioisotopes and the radiation workers to be managed, and the system comprises: an integrated management server collecting, through a wired and wireless communication network, data, which is periodically collected by a radiation source storage place entrance/exit management device, a mobile radiation projector tracking device, and a smart dosimeter according to a preset period value, and data, which is received from at least one of mobile radiation source tracking devices, thereby analyzing and managing the pieces of data; and a manager terminal for requesting, from the integrated management server, real-time information on a radiation source and workers, and performing control by a manager through a system operation setting change of the radiation source tracking devices and the smart dosimeter and through a request for data including an image.

## Description

### [Technical Field]

The present invention relates to an integrated safety management system for radioisotopes and radiation workers, and more particularly, to an integrated safety management system which collects location and state data of radioisotopes and radiation workers (persons engaged in work such as transportation, operation, treatment, etc., of radioactive materials) and analyzes states of the radioisotopes and radiation workers to take measures and issue a warning according to the analysis.

### [Background Art]

Radiation sources and radiation instruments in which radioactive materials are used often cause public safety threats due to carelessness of managers in transportation, moving, and using them or thefts by persons who do not have knowledge of radiation sources and radiation instruments. In addition, public damage due to various accidents that may occur when nuclear fuel rods or radioactive wastes of nuclear power plants is expected to be enormous, and thus, measures for radiation safety management, such as checking the information regarding use and transportation status, and the like, are required.

Thus, radioactive material-related companies and related organizations have a remote radiation source monitoring system which checks movement use states of radiation sources dispersed throughout the nation in real time through a geographic information system (GIS) and manages movement routes and radiation doses to strengthen a security management level of the radiation sources, prevent theft (or robbery, i.e., being robbed) or loss of radiation sources, and provide location information for early handling in case of an accident.

The remote monitoring system is a tracking management system capable of easily recognizing and managing various types of information regarding radioactive materials through positioning of a radiation source and a radiation instrument through a communication network and computerizing and receiving the information online to thereby manage radioactive materials.

In the tracking management system, a GPS receiver of a tracking device attached to a moving radiation source for location tracking positions a radiation source and a radiation instrument upon receiving GPS satellite signals from GPS satellites and a WCDMA terminal unit communicates with the closest base station of the instrument to perform positioning. Also, the tracking device periodically transmits a location and a state of the radiation source to a central control server, and since the central control server is able to monitor a usage status of the moving radiation source, it is possible to prevent loss, theft, and the like, of the radiation source, also prevent the occurrence of an emergency accident such as leakage of radiation, or the like, and promptly cope with an accident when it occurs.

However, such a system is limited to a radiation source (mobile radiation irradiator) for a non-destructive inspection and an infrastructure related to management and tracking of other radiation sources is insufficient.

In addition, the government revised the regulations on the radioisotope security management in the Nuclear Safety Act on July 1, 2014 to strengthen security management, the contents thereof are as follows.

[Paragraph 7, Article 8 of the Regulation on Radioisotope Security Management]

"Measures to track and manage transportation of radioisotopes in real time should be taken."

According to the strengthened radioisotope security management regulation, a business worker must obligatorily have a system for tracking and recording a movement route in the case of moving a radiation source and reporting and proving the tracked and recorded movement route of the radiation source when an agency concerned requests it. However, due to the absence of a system that may support the system, an actual management system of a radiation source handling company is experiencing difficulties.

In addition, radiation generated by radioisotopes, which are inevitably used by technological power of modern humans, has a huge negative influence on the surrounding environment, particularly, on human beings, in addition to the original purpose thereof, and thus, management of a radiation source has a close correlation with life. It is therefore natural that the management of a radiation source must include management of workers who are most frequently exposed to radiation-related risks.

Conventional radiation source tracking systems and various technical systems for managing workers' exposure to radiation may serve the purpose of individual tracking management but has structural limitations in realizing a function such as preventing a risk of loss and theft of a radiation source by monitoring and tracking a situation regarding protection of workers directly connected to a radiation source and safety management, as well as use of the radiation source, and analyzing a correlation through data obtained from both sides and managing safety of a worker through advance warning regarding a high dose radiation-exposure area and real-time warning in various dangerous situations, and thus, the need for an integrated safety management system has emerged.

Therefore, there is a need for an integrated safety management system which may periodically check and control not only storage, use, and movement of radioisotopes but also a status of a worker involved in the radioisotopes.

Korean Patent Registration No. 10-0765717: Integrated Management System for Open Radioisotope and Integrated Management Method for Open Radioisotope Using The Same

Korean Patent Registration No. 10-0777035: Radioisotope and Radiation Generation Device Management system

### [Disclosure]

### [Technical Problem]

The present invention has been made to solve the above-mentioned problems, and it is an object of the present invention to provide an integrated safety management system which collects location and state data of radioisotopes and radiation workers (persons engaged in work such as transportation, operation, treatment, etc., of radioactive materials) and analyzes states of the radioisotopes and radiation workers to take measures and issue a warning according to the analysis, so that a radioisotope handling company may systematically manage safety of radioisotope (hereinafter, referred to as a 'management source') and a radiation worker (hereinafter, referred to as a 'worker') as management targets therethrough.

Another object of the present invention is to provide an integrated safety management system capable of integrally recording, storing, analyzing, and outputting radioisotope (hereinafter, referred to as a 'moved source') transported for the purpose of purchasing a radiation source used for an operation and other purposes and information of a worker such that data such as movement, use, and the like, as well as storage of the radioisotope may be controlled and monitored, thereby enabling safer and more thorough management and supervision in relation to handling and use of the radioisotope.

Objects of the present disclosure are not limited to the foregoing objects and any other objects not mentioned herein may be clearly understood by a person skilled in the art from the present disclosure described hereinafter.

### [Technical Solution]

According to an aspect of the present invention, there is provided an integrated safety management system for a radioisotope and a radiation worker including an integrated management server collecting, through a wired/wireless communication network, data periodically collected by a radiation source storage location entry management device, a mobile radiation irradiator tracking device, and a smart dosimeter (personal dosimeter having a location tracking function to be attached to a radiation worker) according to a predetermined period value and data received from at least one moving source tracking device and analyzing and managing a radiation source and a worker.

Preferably, when missing data occurs, the integrated management server may request retransmission of information from a missing information causing device, and when the request is refused, the integrated management server may determine that the device is defective and transmit the abnormal device state to the manager or a worker by SMS.

Preferably, the integrated management server may provide a radiation source tracking device including at least one of the mobile radiation irradiator tracking device, the moving source tracking device, and the radiation source storage location entry management device, and a smart dosimeter to be attached to a worker to a consumer, and include: a state management unit, when use of a radiation source from an operation orderer is generated, collecting and analyzing a movement, a location, a dose, an exposure dose of a mobile radiation irradiator, the moving source, and the worker on the basis of data collected from at least one of the provided mobile radiation irradiator tracking device, the smart dosimeter, and the moving source tracking device, and managing data of the radiation source and the worker in a situation in which an operation and movement are actually made; a safety management unit checking use and management of the radiation source and analyzing and managing protection and safety management check control of the worker, daily exposure dose, and accumulated exposure dose; and a movement management unit collecting and analyzing a storage location entry record according to a movement of a radiation source, a storage location or an image in a radiation source movement vehicle, a radiation source unloading record and the presence or absence of radiation source in a movement storage box, and related worker information on the basis of data collected from at least one of the radiation source storage location entry management device, the moving radiation source tracking device, and the smart dosimeter to track and manage storage, movement, and warehousing and release of the radiation source.

Preferably, the state management unit, the safety management unit, and the movement management unit may provide a management platform for online control so that the manager may monitor a state of the radiation source and a change in state of the worker according to time and dates by monitoring stored collected data in real-time online.

Preferably, when a warning situation occurs, the state management unit, the safety management unit, and the movement management unit may transmit a warning message, together with image data captured on the spot, to the worker or the manager.

Preferably, the safety management unit may collect a radiation dose of the irradiator and an exposure dose of the worker, derive distance data between the irradiator and the worker and derive an operation time of each worker on the basis of each location and state data, and compare an appropriate operation distance and an appropriate operation time according to radiation doses and exposure doses with a predetermined regulation range, and when the appropriate operation distance and the appropriate operation time exceed the regulation range, the safety management unit may transmit a warning signal to the worker or the manager.

Preferably, the safety management unit may derive an operation cautious area through analysis (comprehensive analysis of over-exposure data) of an existing accumulated operation data (exposure dose according to time and spaces) and compare a location of the worker with the derived operation cautious area, and when the worker comes close to the operation cautious area and operates (works) according to a comparison result, the safety management unit may transmit a corresponding caution signal to the worker or the manager.

Preferably, the movement management unit may derive the radiation source and worker's incoming/outgoing data collected from the radiation source storage location entry management device, location information collected from the moving radiation source tracking device, whether the movement storage box is opened and closed, incoming/outgoing particulars of the radiation source in the movement storage box, and user information and compare the derived information with predetermined use information, and when the derived information is different from actual data, the movement management unit may transmit a caution signal to the worker or the manager.

Preferably, the integrated management server may check whether a worker wears a dosimeter through movement information, location information, and exposure dose information of the worker, and if the worker does not wear the dosimeter, the integrated management server may transmit a caution signal to the worker or the manager.

Preferably, the integrated management server may check whether the radiation source is stolen and lost on the basis of at least one of the locations of the radiation source and the worker, distance deriving and incoming/outgoing data, user information, information of sensing opening and closing of the movement storage box, and particulars of incoming/outgoing of the radiation source in the movement storage box collected through the state management unit and the movement management unit.

### [Advantageous Effects]

As described above, as for the integrated safety management system for a radioisotope and a radiation worker according to the present invention, since a related organization handling a radioisotope uses the integrated safety management system, data regarding whether a location keeping a radioisotope in storage under management is entered may be collected and positioning may be performed from the outside, and since an additional state regarding a dose value, movement, and the like, may be checked, more systematic management may be made.

Further, since it is possible to collect and display data of a smart dosimeter of a worker through the integrated safety management system, locations and states of a worker (driver) who is involved in transportation and movement of a radiation source and a worker who directly uses the radiation source may be checked together with radiation source data, enabling comprehensive monitoring and management/supervision.

Thus, in addition to the advantage that data of even the involved worker, as well as the radiation source which is used and moved, may be monitored at a time, all data regarding an external influence which may be associated with each other in terms of the characteristics of the operation such as [who-when-what-how] in relation to one radiation source may be collected, organized, and output, and thus, management of the operation may be segmented and systemized, enhancing efficiency.

Also, since management of entry to a storage location of a radiation source is made into data and comprehensively monitored, together with data of positioning of a location of handled radioisotopes and other state data, by the single integrated safety management system, efficiency of management may be enhanced, and the radiation source can be thoroughly managed and supervised during the whole process from when the radiation source is kept in storage to when the radiation source is moved and utilized for an operation, which is anticipated to significantly contribute to the prevention and handling of a safety accident, various losses, and an accident of theft.

Also, according to the present invention, it is possible to monitor the radiation source and surrounding environment from storage of the radiation source to movement and operation of the radiation source.

That is, since all data of a stored radiation source, a moved radiation source, a radiation source used for an operation, and a worker can be managed, a monitoring environment may be flexibly established according to characteristics of a radiation source handling company.

In other words, the collected data may be classified in the form of stored radiation source + mobile radiation irradiator + worker, mobile radiation source + worker (driver), mobile radiation irradiator + worker, mobile radiation source + mobile radiation irradiator + worker (including all the radiation workers), and thus, the integrated safety management system may be easily established for each management target based on the need of a handling company, increasing utilization of the system.

### [Description of Drawings]

FIG. 1 is a view illustrating a configuration of an integrated safety management system for a radioisotope and a radiation worker according to an embodiment of the present invention;
FIGS. 2A, 2B and 2C are block diagrams specifically illustrating a configuration of an integrated management server of FIG. 1;
FIG. 3 is a detailed block diagram illustrating a configuration of a radiation source storage location entry management device of FIG. 1;
FIG. 4 is a detailed block diagram illustrating a configuration of a mobile radiation irradiator tracking device of FIG. 1;
FIG. 5 is a detailed block diagram illustrating a configuration of a smart dosimeter of FIG. 1; and
FIG. 6 is a detailed block diagram illustrating a construction of a mobile radiation source tracking device of FIG. 1.

### [Best Modes]

The advantages, features and aspects of the present invention will become apparent from the following description of the embodiments with reference to the accompanying drawings, which is set forth hereinafter.

An embodiment of an integrated safety management system for a radioisotope and radiation worker according to the present invention will be described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Therefore, the embodiment described in the present disclosure and the configuration illustrated in the drawings are merely the most preferred embodiment of the present invention, rather than representing all the technical concepts of the present invention, so the present invention is meant to cover all modifications, similarities and alternatives which are included in the spirit and scope of the present invention at the time of filing of the present invention.

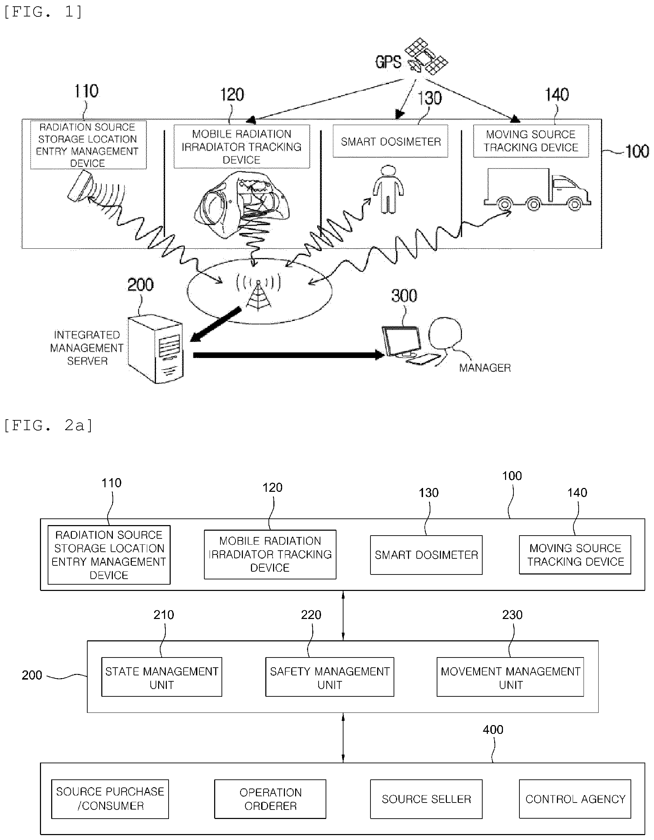

FIG. 1 is a view illustrating a configuration of an integrated safety management system for a radioisotope and a radiation worker according to an embodiment of the present invention.

As illustrated in FIG. 1, the integrated safety management system of the present invention includes an integrated management server 200 collecting, through a wired/wireless communication network, data collected by a radiation source storage location entry management device 110, a mobile radiation irradiator tracking device 120, and a smart dosimeter 130 and data received from at least one moving source tracking device 140 and performing analysis and management and a manager terminal 300 requesting information of a radiation source and a worker in real time from the integrated management server 200 and performing control of a manager by regularly requesting required data including a change and image in setting (terminal S/W) of a system operation of the radiation source tracking devices 110, 120, and 140, and the smart dosimeter 130. Also, if the manager wants, the manager may request an image on the spot in real time through the integrated management server 200 and may be provided with a current situation through the manager terminal 300 like a CCTV. Meanwhile, the manager terminal 300 may be a terminal (a mobile terminal, a PC, etc.) independently separated from the integrated management server 200, but this is only for the purposes of description and the present invention is not limited thereto and the manager terminal 300 may be integrally configured with the integrated management server 200.

In this manner, the integrated management server 200 classifies, analyzes, and aligns the data collected by the radiation source storage location entry management device 110, the mobile radiation irradiator tracking device 120, and the smart dosimeter 130 and the data continuously received from at least one moving source tracking device 140, organizes radiation source related information (storage, entry, movement, operation time, per-time radiation source and worker state, worker information, etc.) on the basis of each of the pieces of collected information, and provides information desired by the manager to the manager terminal 300. Also, when missing data occurs, the integrated management server 200 requests retransmission of information from a missing information causing device, and when the request is refused, the integrated management server 200 determines that the device is defective and transmits the abnormal device state to the manager and a worker by SMS.

Accordingly, the manager may view at a glance radiation source entry data, a location, a dose, an exposure dose, and other states, and the like, of a mobile radiation irradiator (radiation source for non-destructive inspection), a moved source, and a worker, at the storage location over time and easily check, instruct, manage, and control an operation according to each situation and state by warning and notification according to each situation of the system. Also, data such as a movement, a location, a dose, an exposure dose, and the like, of the mobile radiation irradiator, the moved source, and the worker, are collected and analyzed, and the data of the radiation source and the worker in every situation in which storing, operation, and movement are actually made is stored in the integrated safety management system to enable monitoring a state of the radiation source and a change in state of the worker according to time and dates, thus helping a supervisor manage and establish an operation system.

Further, since whether a worker wears a dosimeter can be known through movement information, location information, and exposure dose information of the worker, the worker is prevented from not wearing the smart dosimeter 130, further helping safety management of the worker. For example, if a movement of the radiation source and a radiation instrument is sensed but there is no movement data of the worker, if there is no worker data in entering a storage location, or if a radiation dose is measured by the radiation irradiator tracking device 120 and the moving source tracking device 140 but there is no exposure dose of the worker, it is determined that the worker does not wear the smart dosimeter 130 and the manager and the worker is informed accordingly, and thus, corresponding measures may be taken.

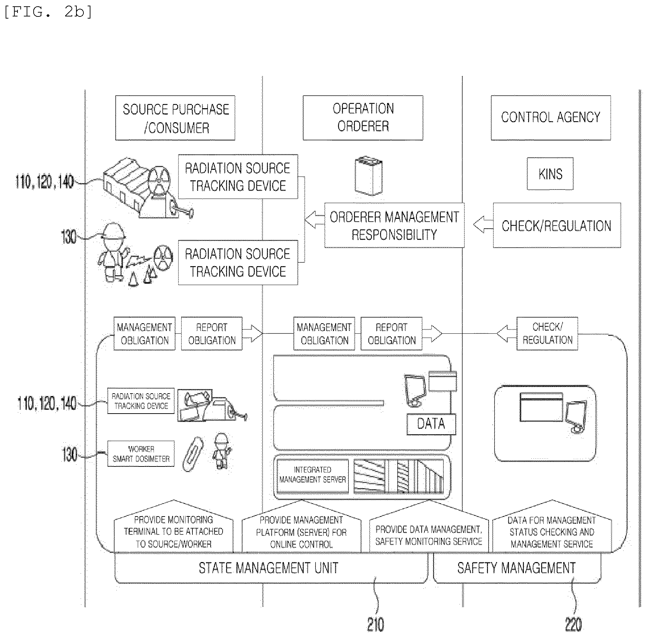

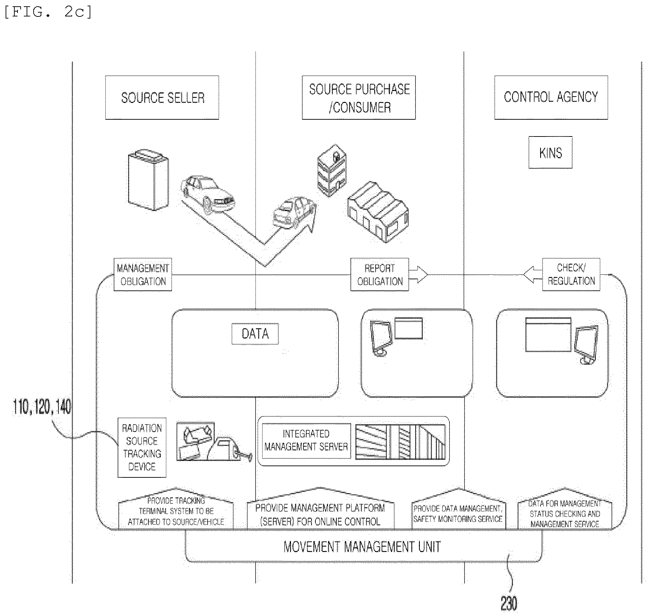

FIGS. 2A, 2B, and 2C are block diagrams specifically illustrating a configuration of the integrated management server 200.

As illustrated in FIGS. 2A, 2B, and 2C, the integrated management server 200 includes a state management unit 210, a safety management unit 220, and a movement management unit 230.

When use of a radiation source from an operation orderer is generated (i.e., when an operation orderer uses a radiation source), the state management unit 210 collects and analyzes a movement, a location, a dose, an exposure dose of the radiation source and the worker on the basis of data collected from at least one of the previously provided mobile radiation irradiator tracking device 120, the smart dosimeter 130, and the moving source tracking device 140, and manages data of the radiation source and the worker in a situation in which an operation and movement are actually made. Here, the state management unit 210 provides a management platform (server) for online control so that the manager may monitor a state of the radiation source and a change in state of the worker according to time and dates by monitoring stored collected data in real-time online.

Accordingly, the state management unit 210 may monitor a state of the radiation source and a change in state of the worker using information such as detection of a movement of the radiation source and the worker, a drawn distance, and the like, through analysis of data collected by the moving source tracking device 140, the mobile radiation irradiator tracking device 120, and the smart dosimeter 130. Also, in the case of a warning situation regarding the state of the radiation source and the change in state of the worker, the state management unit 210 transmits a warning message to the worker and the manager, and here, image data captured on the spot is also provided together.

The safety management unit 220 checks use and management of the radiation source and analyzes and manages protection and safety management check control of the worker, daily exposure dose, accumulated exposure dose, and the like. Also, when a warning situation occurs, the safety management unit 220 transmits a warning message to the worker and manager and, here, image data captured on the spot is also provided together.

That is, the safety management unit 220 collects a radiation dose of the irradiator and an exposure dose of the worker, derives distance data between the irradiator and the worker and derives an operation time of each worker, and compares an appropriate operation distance and an appropriate operation time according to radiation doses and exposure doses with a predetermined regulation range, and when the appropriate operation distance and the appropriate operation time exceed the regulation range, the safety management unit 220 transmits a warning signal to the worker. In an embodiment, as for the appropriate operation distance, an appropriate operation distance of the worker based on the irradiator radiation dose data is calculated, and the calculated appropriate operation distance value is compared with actually derived operation distance data, and when the actually derived operation distance is shorter than the appropriate operation distance, a warning signal is transmitted to the worker.

As for the appropriate working time, an appropriate operation time value previously calculated on the basis of data of accumulated daily exposure dose of the operator is compared with actually derived operation time data of the operator, and a warning signal according to a comparison result is transmitted to the worker. Also, it is determined whether protection is appropriately performed by analyzing the distance data between the irradiator and the worker and the irradiator radiation dose and the operator exposure dose data, and when it is determined that protection of the worker is not appropriate, a warning message is transmitted to the worker. Also, the warning signal transmitted to the worker may be provided through SMS and a corresponding fact may also be provided to the manager.

Also, the safety management unit 220 derives an operation cautious area through analysis (comprehensive analysis of over-exposure data) of an existing accumulated operation data (exposure dose according to time and spaces) and compares a location of the worker with the derived operation cautious area, and when the worker comes close to the operation cautious area and operates (works) according to a comparison result, the safety management unit 220 transmits a corresponding caution signal to the worker. The caution signal transmitted to the worker may be provided through SMS and a corresponding fact may also be provided to the manager.

The movement management unit 230 collects and analyzes a storage location entry record according to a movement of a radiation source, a storage location or an image in a radiation source movement vehicle, a radiation source unloading record and the presence or absence of radiation source in a movement storage box, related worker information, and the like, on the basis of data collected from at least one of the radiation source storage location entry management device 110, the moving radiation source tracking device 140, and the smart dosimeter 130, to track and manage storage, movement, and warehousing and release of the radiation source. Here, the movement management unit 230 provides a management platform (server) for online control so that the manager may monitor a change in state of the radiation source according to time and dates by monitoring the stored collected data in real time online.

Accordingly, the movement management unit 230 may prevent theft and loss of the radiation source through the radiation source and worker's incoming/outgoing data (entry time, etc.) collected from the radiation source storage location entry management device 110, location information collected from the moving radiation source tracking device 140, whether the movement storage box is opened and closed, incoming/outgoing particulars of the radiation source in the movement storage box, user information, worker's location information collected from the smart dosimeter 130, and the like.

Also, in the case of a warning situation regarding a risk of theft and loss of the radiation source, the movement management unit 230 transmits a warning message to the worker and the manager, and here, the movement management unit 230 also provides image data captured on the spot together. Also, a caution signal transmitted to the worker may be provided through SMS and a corresponding fact may also be informed to the manager.

In addition, the integrated management server 200 derives locations of the radiation source and the worker and a corresponding distance through the state management unit 210 and the movement management unit 230, and when it is sensed that the movement storage box is opened and closed when the worker is away, the integrated management server 200 may provide theft and loss warning to prevent theft and loss. In addition, various embodiments of a method for preventing theft and loss may be implemented within the scope of the technical idea of the present invention through a combination of collected data.

Meanwhile, the radiation source storage location entry management device 110 is a component for collecting data such as an entry fact of a radiation source from a storage location, which is a separate location formed to store a radiation source and a radiation instrument in a seller and a consumer, image information, image information, related worker information, and the like, to prevent loss and theft of the radiation source therethrough and checking whether the radiation source is kept in storage at an appropriate location (storage location = shielding facility) when the radiation source is not in use to prevent a safety accident. The radiation source storage location entry management device 110 transmits data for determining whether the radiation source enters or leaves a storage location through an RFID reader, information of a worker involved in the entry, information such as an image in the storage location through a camera, and the like, to the integrated management server 200 through a communication network.

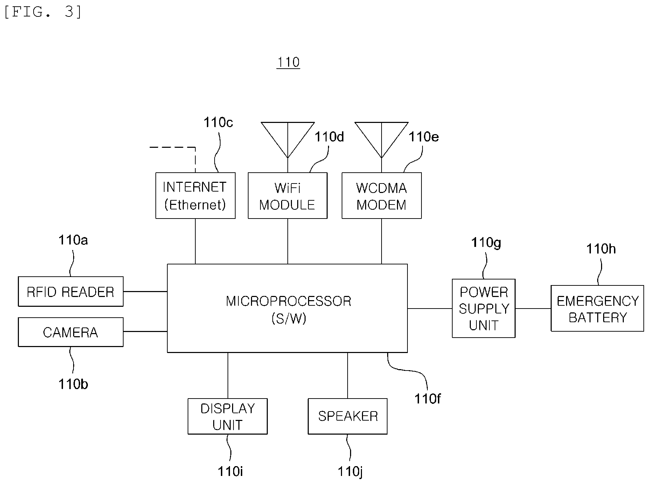

FIG. 3 is a detailed block diagram illustrating a configuration of the radiation source storage location entry management device 110, which includes an RFID reader 110a checking entry radiation source information, determining whether the radiation source enters and leaves, and measuring an entry time of the radiation source by recognizing the mobile radiation irradiator tracking device 120 and an RFID tag of the radiation source and determining whether a worker enters or leaves and measuring an entry time of the worker by recognizing an RFID tag 130i attached to the smart dosimeter 130 of the worker, a camera 110b capturing an image in a storage location storing the radiation source, an Ethernet 110c transmitting data collected from the RFID reader 110a through the Internet, WiFi, and a mobile communication network and image data captured by the camera 110b to the integrated management server 200, a WiFi module 110d, a data communication modem including a WCDMA modem 110e, a microprocessor 110f collecting data collected from the RFID reader 110a and image data captured by the camera 110b during a predetermined repeated circulation time on the basis of stored system operation setting and performing control such that the collected image data is transmitted through the data communication modem, a power supply unit 110g providing electric power to the radiation source storage location entry management device 110 using external electric power, an emergency battery 110h providing temporary electric power to the radiation source storage location entry management device 110 when external electric power is cut off, a display unit 110i displaying state information including a state such as communication, power, setting, and the like, of the radiation source storage location entry management device 110, error information, and the like, and a speaker 110j outputting the state information including a state such as communication, power, setting, and the like, of the radiation source storage location entry management device 110, the error information, warning notification, and the like, by a sound.

For reference, in the case of the radiation source, there are many cases where a separate RFID tag is attached in order to check information and incoming/outgoing record, and thus, it is described that a case where an RFID tag is attached to a radiation source as well is included in this embodiment. However, it is natural to exclude a case where the RFID tag is not attached to the radiation source. The RFID tag attached to the radiation source may be provided in the integrated safety management system according to the present invention or sold so as to be attached to the radiation source.

The mobile radiation irradiator tracking device 120 is a component attached to a radiation source (irradiator) for non-destructive inspection to collect data such as a location, an ambient dose value, a state, and the like, of the irradiator to prevent theft and loss of the irradiator therethrough. The mobile radiation irradiator tracking device 120 collects location information through a GPS receiver, location information through a WCDMA modem, ambient radiation dose through a G-M detector, state information of the mobile radiation irradiator tracking device 120, information whether movement is detected through a movement sensor, and transmits the collected information to the integrated management server 200 via a communication network.

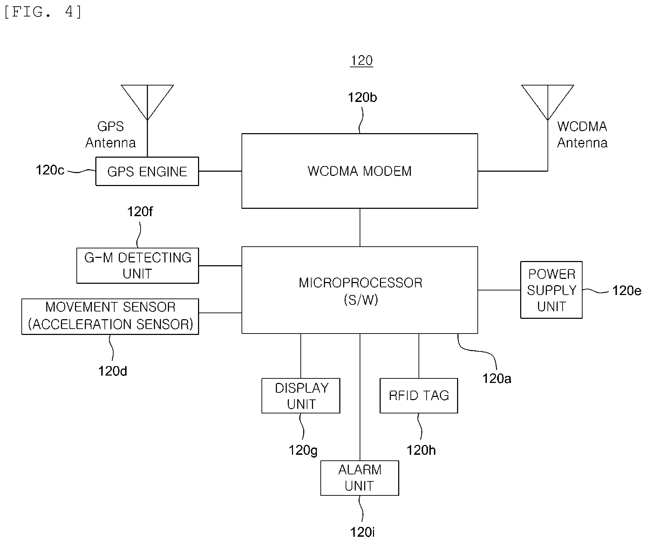

FIG. 4 is a detailed block diagram illustrating a configuration of the mobile radiation irradiator tracking device 120, which includes a microprocessor 120a collecting data of a mobile radiation irradiator (hereinafter, referred to as an 'irradiator') during a predetermined repeated circulation time) on the basis of a stored system operation setting, a WCDMA modem 120b receiving location information received from a WCDMA network through a WCDMA antenna and transmitting movement information of the irradiator, together with the location information, to the integrated management server 200, a GPS engine 120c receiving location information received from a GPS network through a GPS antenna and transferring the received location information to the WCDMA modem 120b, a movement sensor 120d sensing movement information of the irradiator including whether the irradiator is moved, a direction of the irradiator, acceleration using a gyro sensor and an acceleration sensor, a power supply unit 120e providing electric power transferred through an internal or charging battery to the system, a G-M detecting unit 120f detecting an ambient dose value of the irradiator, a display unit 120g displaying state information and error information of the mobile radiation irradiator tracking device 120 including communication, electric power, set value, and the like, of the mobile radiation irradiator tracking device 1120, and the like, an RFID tag 120h storing unique identification information of the mobile radiation irradiator tracking device 120, and an alarm unit 120i comparing an ambient dose value detected by the G-M detecting unit 120f with a reference dose value and outputting a sound to the outside when a dose value equal to or greater than the reference dose value is detected. Here, the microprocessor 120a uses a data accumulation transmission type protocol for temporarily storing collected data and re-transmitting the same when transmission to the integrated management server 200 fails.

Also, the smart dosimeter 130, as a personal exposure measuring device with a location tracking function attached to a worker, is a component for collecting data such as a location, an exposure dose, a state, and the like, of the worker and preventing a safety accident therethrough. The smart dosimeter 130 collects data such as location information through a GPS receiver, location information through the WCDMA mode, an exposure dose of the worker through the G-M detecting unit, whether a movement is detected through a movement detector, and the like, and transmits the collected data to the integrated management server 200 via a communication network.

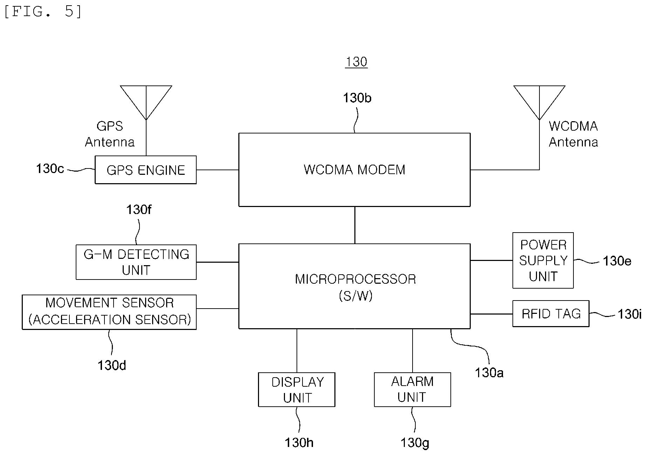

FIG. 5 is a detailed block diagram of the configuration of the smart dosimeter 130, which includes a microprocessor 130a collecting data of a worker during a predetermined repeated circulation time on the basis of a stored system operation setting, a WCDMA modem 130b receiving location information of the worker received from a WCDMA network through a WCDMA antenna and transmitting movement information of the worker, or the like, together with the location information of the worker to the integrated management server 200, a GPS engine 130c receiving the location information of the worker received from a GPS network through a GPS antenna and transferring the received location information to the WCDMA modem 130b, a movement sensor 130d sensing movement information of the worker including whether the worker moves, a direction, and an acceleration using a gyro sensor and an acceleration sensor, a power supply unit 130e providing electric power transferred through an internal or charging battery to the system, a G-M detecting unit 130f measuring and detecting an exposure dose of the worker, an alarm unit 130g comparing the exposure dose detected by the G-M detecting unit 130f with a reference exposure dose and outputting a sound to the outside when the exposure dose equal to or greater than the reference exposure dose is detected, a display unit 130h displaying state information of the smart dosimeter 130 including communication, power, set value, and the like, of the smart dosimeter 130, detected exposure dose, error information, and the like, and an RFID tag 130i storing unique identification information of the smart dosimeter 130. Here, the microprocessor 130a uses a data accumulation transmission type protocol for temporarily storing collected data and re-transmitting the same when transmission to the integrated management server 200 fails.

Also, the moving source tracking device 140 is a device for tracking a radiation source and a radiation instrument transported and moved by a vehicle for sale and use. Here, the radiation source and the radiation instrument are contained in a movement storage box in the vehicle. The moving source tracking device 140 is a component for collecting data such as whether the movement storage box is opened and closed, a dose value of the periphery of the movement storage box or inside the vehicle, a location, image data of the vehicle, and the like, and recognizing an RFID tag of the mobile radiation irradiator tracking device 120, the radiation source, and the smart dosimeter 130 by an RFID reader of the moving source tracking device 140 to collect entry record and the presence and absence of the radiation source and radiation instrument in the movement storage box and user information data, thereby preventing theft and loss and preventing a safety accident. The moving source tracking device 140 collects data such as location information through a GPS receiver, location information through a WCDMA modem, an ambient radiation dose through the G-M detecting unit, image capturing and photographing in a movement vehicle through a camera, whether the radiation source enters and is present in the storage box through the RFID reader, user information recognition, detection of a movement through a movement sensor, tracking device state information, and the like, and transmits the collected data to the integrated management server 200 via a communication network.

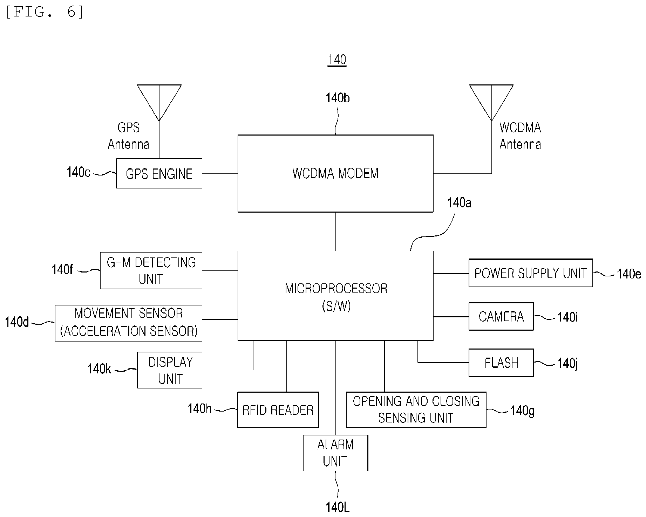

FIG. 6 is a detailed block diagram of the moving source tracking device 140. The moving source tracking device 140 includes a microprocessor 140a collecting data of a moving source during a predetermined repeated circulation time on the basis of a stored system operation setting, a WCDMA modem 140b receiving location information of the moving source received from a WCDMA network through a WCDMA antenna and transmitting movement information of the moving source, together with the location information of the moving source, and the like, to the integrated management server 200, a GPS engine 140c receiving the location information of the moving source received from a GPS network through a GPS antenna and transferring the received location information to the WCDMA modem 140b, a movement sensor 140d sensing movement information of the moving source including whether the moving source is moved, direction, acceleration using a gyro sensor and an acceleration sensor, a power supply unit 140e providing electric power transferred through an internal or charging battery to the system, a G-M detecting unit 140f detecting a radiation dose near the moving source (near the movement storage box or inside a moving vehicle), an opening and closing sensing unit 140g sensing whether a radiation source movement storage box is opened and closed, an RFID reader 140h measuring radiation source information, determining whether a radiation source enters and leaves the movement storage box, an entry time of the radiation source, and the presence and absence of the radiation source in the movement storage box by recognizing an RFID tag of the mobile radiation irradiator tracking device 120 and the radiation source, and collecting worker information by recognizing an RFID tag 130i of the smart dosimeter 130, a camera 140i capturing an image in a moving vehicle, a flash 140j providing a light source when the camera 140i captures an image, a display unit 140k displaying state information, error information, and the like, of the moving source tracking device 140 including communication, power, set value, and the like, of the moving source tracking device 140, and an alarm unit 1401 comparing an ambient dose value detected by the G-M detecting unit 140f with a reference dose value and outputting a sound to the outside when the dose value is detected to be equal to or greater than the reference dose value. Here, the microprocessor 140a uses a data accumulation transmission type protocol for temporarily storing collected data and re-transmitting the same when transmission to the integrated management server 200 fails.

The technical idea of the present invention described above is specifically described in the preferred embodiment, but it should be appreciated that the embodiment is for the description and is not intended for limitation. Also, it will be understood by those skilled in the art that various changes and modifications may be made without departing from the spirit and scope of the invention as defined by the appended claims. Accordingly, the true scope of the present invention should be determined by the technical idea of the appended claims.

## Claims

1. An integrated safety management system for a radioisotope and a radiation worker, the integrated safety management system comprising:
an integrated management server collecting, through a wired/wireless communication network, data periodically collected by a radiation source storage location entry management device, a mobile radiation irradiator tracking device, and a smart dosimeter according to a predetermined period value and data received from at least one moving source tracking device 140 and analyzing and managing a radiation source and a worker.

2. The integrated safety management system of claim 1, wherein
when data missing occurs, the integrated management server requests retransmission of information from a missing information causing device, and when the request is refused, the integrated management server determines that the device is defective and transmit the abnormal device state to the manager and a worker by SMS.

3. The integrated safety management system of claim 1, wherein
the integrated management server provides a radiation source tracking device including at least one of the mobile radiation irradiator tracking device, the moving source tracking device, and the radiation source storage location entry management device, and a smart dosimeter to be attached to a worker to a consumer, and includes:
a state management unit, when use of a radiation source from an operation orderer is generated, collecting and analyzing a movement, a location, a dose, an exposure dose of a mobile radiation irradiator, the moving source, and the worker on the basis of data collected from at least one of the provided mobile radiation irradiator tracking device, the smart dosimeter, and the moving source tracking device, and managing data of the radiation source and the worker in a situation in which an operation and movement lare actually made;
a safety management unit checking use and management of the radiation source and analyzing and managing protection and safety management check control of the worker, daily exposure dose, and accumulated exposure dose; and
a movement management unit collecting and analyzing a storage location entry record according to a movement of a radiation source, a storage location or an image in a radiation source movement vehicle, a radiation source unloading record and the presence or absence of radiation source in a movement storage box, and related worker information on the basis of data collected from at least one of the radiation source storage location entry management device, the moving radiation source tracking device, and the smart dosimeter to track and manage storage, movement, and warehousing and release of the radiation source.

4. The integrated safety management system of claim 3, wherein
the state management unit, the safety management unit, and the movement management unit provide a management platform for online control so that the manager monitors a state of the radiation source and a change in state of the worker according to time and dates by monitoring stored collected data in real-time online.

5. The integrated safety management system of claim 3, wherein
when a warning situation occurs, the state management unit, the safety management unit, and the movement management unit transmit a warning message, together with image data captured on the spot, to the worker or the manager.

6. I The integrated safety management system of claim 3, wherein
the safety management unit collects a radiation dose of the irradiator and an exposure dose of the worker, derives distance data between the irradiator and the worker and derives an operation time of each worker on the basis of each location and state data, and compares an appropriate operation distance and an appropriate operation time according to radiation doses and exposure doses with a predetermined regulation range, and when the appropriate operation distance and the appropriate operation time exceed the regulation range, the safety management unit transmits a warning signal to the worker or the manager.

7. The integrated safety management system of claim 3, wherein
the safety management unit derives an operation cautious area through analysis (comprehensive analysis of over-exposure data) of an existing accumulated operation data (exposure dose according to time and spaces) and compares a location of the worker with the derived operation cautious area, and when the worker comes close to the operation cautious area and operates (works) according to a comparison result, the safety management unit transmits a corresponding caution signal to the worker or the manager.

8. The integrated safety management system of claim 3, wherein
the movement management unit derives the radiation source and worker's incoming/outgoing data collected from the radiation source storage location entry management device, location information collected from the moving radiation source tracking device, whether the movement storage box is opened and closed, incoming/outgoing particulars of the radiation source in the movement storage box, and user information and compare the derived information with predetermined use information, and when the derived information is different from actual data, the movement management unit transmits a caution signal to the worker or the manager.

9. The integrated safety management system of claim 3, wherein
the integrated management server checks whether a worker wears a dosimeter through movement information, location information, and exposure dose information of the worker, and if the worker does not wear the dosimeter, the integrated management server transmits a caution signal to the worker or the manager.

10. The integrated safety management system of claim 3, wherein
the integrated management server checks whether the radiation source is stolen and lost on the basis of at least one of the locations of the radiation source and the worker, distance deriving and incoming/outgoing data, user information, information of sensing opening and closing of the movement storage box, and particulars of incoming/outgoing of the radiation source in the movement storage box collected through the state management unit and the movement management unit.

11. The integrated safety management system of claim 1, wherein
the radiation source storage location entry management device includes:
an RFID reader checking entry radiation source information, determining whether the radiation source enters and leaves, and measuring an entry time of the radiation source by recognizing the mobile radiation irradiator tracking device and an RFID tag of the radiation source, and determining whether a worker enters or leaves, and measuring an entry time of the worker by recognizing the RFID tag attached to the smart dosimeter of the worker;
a camera capturing an image in a storage location storing the radiation source,
an Ethernet transmitting data collected from the RFID reader through the Internet, WiFi, and a mobile communication network and image data captured by the camera to the integrated management server;
a WiFi module;
a data communication modem including a WCDMA modem;
a microprocessor collecting data collected from the RFID reader and image data captured by the camera during a predetermined repeated circulation time on the basis of stored system operation setting and controlling transmission of the data through the data communication modem;
a power supply unit providing electric power to the radiation source storage location entry management device using external electric power;
an emergency battery providing temporary electric power to the radiation source storage location entry management device when external electric power is cut off;
a display unit displaying state information including a state of communication, power, and setting of the radiation source storage location entry management device, and error information; and
a speaker outputting the state information including a state of communication, power, and setting of the radiation source storage location entry management device, the error information, and warning notification by a sound.

12. The integrated safety management system of claim 1, wherein
the mobile radiation irradiator tracking device includes:
a microprocessor collecting data of a mobile radiation irradiator during a predetermined repeated circulation time) on the basis of a stored system operation setting;
a mobile communication modem receiving location information received from a mobile communication network and transmitting movement information of the irradiator, together with the location information, to the integrated management server;
a GPS engine receiving location information received from a GPS network through a GPS antenna and transferring the received location information to the mobile communication modem;
a movement sensor sensing movement information of the irradiator including whether the irradiator is moved, a direction of the irradiator, acceleration using a gyro sensor and an acceleration sensor;
a power supply unit providing electric power transferred through an internal or charging battery to the system;
I a G-M detecting unit detecting an ambient dose value of the irradiator;
a display unit displaying state information and error information of the mobile radiation irradiator tracking device including communication, electric power, and a set value of the mobile radiation irradiator tracking device;
an RFID tag storing unique identification information of the mobile radiation irradiator tracking device; and
an alarm unit comparing an ambient dose value detected by the G-M detecting unit with a reference dose value and outputting a sound to the outside when a dose value equal to or greater than the reference dose value is detected.

13. The integrated safety management system of claim 1, wherein
the smart dosimeter includes:
a microprocessor collecting data of a worker during a predetermined repeated circulation time on the basis of a stored system operation setting;
a mobile communication modem receiving location information of the worker received from a mobile communication network and transmitting movement information of the worker, together with the location information of the worker, to the integrated management server;
a GPS engine receiving the location information of the worker received from a GPS network and transferring the received location information to the mobile communication modem;
a movement sensor sensing movement information of the worker including whether the worker moves, a direction, and an acceleration using a gyro sensor and an acceleration sensor;
a power supply unit providing electric power transferred through an internal or charging battery to the system,
a G-M detecting unit measuring and detecting an exposure dose of the worker;
an alarm unit comparing the exposure dose detected by the G-M detecting unit with a reference exposure dose and outputting a sound to the outside when the exposure dose lequal to or greater than the reference exposure dose is detected;
a display unit displaying state information of the smart dosimeter including communication, power, a set value of the smart dosimeter, detected exposure dose, and error information; and
an RFID tag storing unique identification information of the smart dosimeter.

14. The integrated safety management system of claim 1, wherein
the moving source tracking device includes:
a microprocessor collecting data of a moving source during a predetermined repetition circulation time on the basis of a stored system operation setting;
a mobile communication modem receiving location information of the moving source received from a mobile communication network and transmitting movement information of the moving source, together with the location information of the moving source, to the integrated management server;
a GPS engine receiving the location information of the moving source received from a GPS network through a GPS antenna and transferring the received location information to the mobile communication modem;
a movement sensor sensing movement information of the moving source including whether the moving source is moved, direction, acceleration using a gyro sensor and an acceleration sensor;
a power supply unit providing electric power transferred through an internal or charging battery to the system;
a G-M detecting unit detecting a radiation dose near the moving source;
an opening and closing sensing unit sensing whether a radiation source movement storage box is opened and closed;
an RFID reader checking entry radiation source information, determining whether the radiation source enters or leaves, and measuring an entry time of the radiation source by recognizing an RFID tag attached to the radiation source and the radiation source tracking device, and checking information of a worker by recognizing an RFID tag attached to a smart dosimeter of the worker;
a camera capturing an image in a radiation source moving vehicle;
a flash providing a light source when the camera captures an image;
a display unit displaying state information and error information of the moving source tracking device including communication, power, a set value of the moving source tracking device; and
an alarm unit comparing an ambient dose value detected by the G-M detecting unit 140f with a reference dose value and outputting a sound to the outside when the dose value is detected to be equal to or greater than the reference dose value.
